(19) Europäisches Patentamt
European Patent Office
Office européen des brevets

(11) EP 1 947 357 B1

## (12) EUROPEAN PATENT SPECIFICATION

(45) Date of publication and mention
of the grant of the patent:
**01.05.2013 Bulletin 2013/18**

(21) Application number: **06797675.3**

(22) Date of filing: **08.09.2006**

(51) Int Cl.:
*F16C 41/00* (2006.01)     *F16C 35/063* (2006.01)
*G01D 5/12* (2006.01)     *G01P 3/487* (2006.01)
*F16C 33/72* (2006.01)     *G01D 5/14* (2006.01)
*G01P 3/44* (2006.01)

(86) International application number:
**PCT/JP2006/317820**

(87) International publication number:
**WO 2007/034690 (29.03.2007 Gazette 2007/13)**

(54) **BEARING WITH ROTATION DETECTING DEVICE**

LAGER MIT ROTATIONSERFASSUNGSVORRICHTUNG

PALIER A DISPOSITIF DE DETECTION DE ROTATION

(84) Designated Contracting States:
**DE FR**

(30) Priority: **22.09.2005 JP 2005275102**

(43) Date of publication of application:
**23.07.2008 Bulletin 2008/30**

(73) Proprietor: **NTN Corporation**
**Osaka-shi, Osaka 550-0003 (JP)**

(72) Inventor: **TAKAHASHI, Toru**
**Iwata-shi**
**Shizuoka 438-0037 (JP)**

(74) Representative: **Baumgärtel, Gunnar**
**Patentanwälte Maikowski & Ninnemann**
**Postfach 15 09 20**
**10671 Berlin (DE)**

(56) References cited:
WO-A1-98/00720       WO-A1-98/00720
WO-A1-2004/025307       WO-A1-2004/025307
JP-A- 02 203 020       JP-A- 02 203 020
JP-A- 2003 148 999       JP-A- 2003 148 999
JP-A- 2004 239 699       US-A- 4 988 219
US-A- 4 988 219

## Description

FIELD OF THE INVENTION

The present invention relates to a bearing with a rotation detecting device for detecting rotations of various machines and equipment, for example, a compact motor, a office machine or an articulated robot.

BACKGROUND OF THE INVENTION

For detecting a rotation or an angle of, for example, a joint of an articulated robot, a bearing with a rotation detecting device integrated with a bearing for supporting a shaft at the joint is employed. Such a bearing with a rotation detecting device is desired to be compact in size, in particular, where the bearing is used in a knuckle joint of a robot. In order to meet with the desire, there has been proposed the bearing with the rotation detecting device as shown in Fig. 8 (See, for example, Patent Document 1).

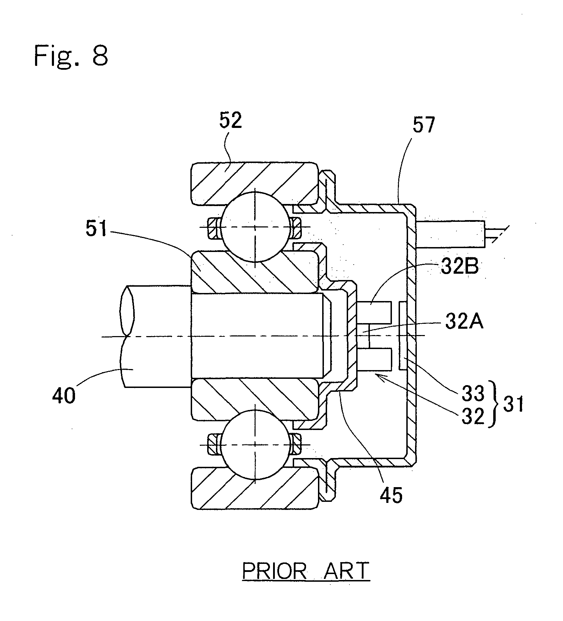

The bearing with the rotation detecting device in Fig. 8 includes an inner race 51 serving as a rotating ring and an outer race 52 serving as a stationary ring. The inner race 51 is provided with a magnetic generating element 32 having a magnetic field changing around a rotation axis, and the outer ring 52 is provided with a magnetic line sensor 33 for detecting a magnetism from the magnetic generating element 32 confronting the magnetic generating element 32 in the axial direction. The magnetic generating element 32 has a permanent magnet 32A and magnetic yokes 328, and is fixed to the inner race 51 through a magnetic generating element fitting member 45 press-fitted and mounted onto an outer diametric face of the inner race 51. Since the inner race 51 rotates together with a shaft 40 of the bearing, the magnetic generating element 32 also rotates together with the shaft 40 through the magnetic generating element fitting member 45. The magnetic line sensor 33 is fixed to the outer race 52 through a sensor fitting member 57 press-fitted on an inner diametric face of the outer race 52.

Patent Document 1: Japanese Laid-open Patent Publication No. 2004-37133

However, Patent Document 1 mentioned above fails to disclose the bearing having a rotation detecting device integrated therewith, and including the inner race serving as a stationary ring and the outer race serving as a rotating ring.

In an outer race rotating type of a bearing, for example, a roller or a pulley, there is desired a rotation detection device which can precisely detect with a compact structure. Further, in the case of the outer race rotating type of bearing, the sensor is arranged on a side of the shaft forming a stationary member, however, the rotating member such as the roller becomes an obstacle to render a wiring of the sensor signal complicated, and a wiring space required for the wiring makes a downsizing of the bearing difficult.

US 4 988 219 A shows a bearing assembly comprising a magnetic rotation sensor being fitted to an end portion of a hollow shaft provided on the stationary inner ring of a bearing, a magnetic generating element provided on the rotational outer ring of the bearing, a cable being inserted within the hollow shaft.

JP 2003 148999 A discloses a bearing assembly comprising a magnetic rotation detector consisting of an anisotropic magnet mounted to a rotational bearing ring in vicinity of an end portion of a shaft and *a magnetic sensor array* mounted to a stationary bearing ring axially adjacent to the anisotropic magnet.

JP 02 203020 A, WO 2004/025307 A1, WO 98/00720 A1 disclose further examples of bearing assemblies being equipped with magnetic rotation detectors.

SUMMARY OF THE INVENTION

An object of the present invention is to provide a bearing with a rotation detecting device which can detect a rotation of the outer race rotating type of bearing, can simplify a wiring of the signal and can be downsized.

Another object of the present invention is to achieve a high precision of a rotation detection and a detection of an absolute angle.

According to the present invention, a bearing assembly with a rotation detecting device includes an inner race, an outer race, rolling elements interposed between the inner race and the outer race, a magnetic generating element provided on the outer ring side of the bearing assembly and having a directionality around a center of rotation of the outer ring so as to confront a bearing center portion of the inner ring, a sensor provided on the inner ring side and positioned at a bearing axis for detecting a magnetism of the magnetic generating element to output information on rotation or angle, and a signal extracting device for extracting a detection signal of the sensor through an interior of a shaft incorporated in an inner diametric portion of the inner ring. In this case, a term "having a directionality around a center of rotation" represents a state that an intensity of magnetic field is changing in a circumferential direction. As a result, when the magnetic generating element is rotated, the magnetic field at any fixed point outside the magnetic generating element is fluctuated in a cycle defined according to a rotating speed.

According to this structure, since the magnetic generating element and the sensor are provided in the outer race side and the inner race side, respectively, in the case of the outer race rotating type of the bearing, it is possible to detect the rotation by means of the sensor installed in the inner race which is a stationary side member and to extract the detection signal from the stationary side. In this case, since the signal extracting device is structured such as to extract through the inner portion of the shaft press-fitted to the inner race, even in the case of extracting the sensor signal from the inner race side in which the wiring space is hard to be obtained in the periphery thereof, it is possible to effectively arrange the signal extracting device such as a cable, to thereby simplify the wiring of the cable, accompanied by a downsizing of the bearing with a rotation detecting device. Further, since the magnetic generating element in the outer race side and the sensor in the inner race side are provided on the axis of the bearing so as to confront each other, it is possible to further downsize the bearing.

In the present invention, the sensor is fitted to an end face of the shaft incorporated in the inner diametric portion of the inner ring. In the case that the sensor is attached to the inner race on the axis thereof, a sensor fitting member may be conventionally necessary, however, according to the invention the sensor fitting member is obviated by attaching the sensor to the axial end portion of the shaft, and as a result, the structure can be simplified.

The bearing according to a conventional example may include a shaft fixing member for fixing the shaft to the inner ring by sandwiching the inner ring from opposite end faces. In the case of this structure, it is possible to stably fit the shaft to the inner race with a simple procedure without being obstructed by the sensor. The shaft fixing member may include a flange formed in the end of the shaft and a nut threadingly mounted on the shaft for sandwiching the inner ring at a location between the nut and the flange.

In one embodiment of the present invention, the shaft is a hollow shaft, and the signal extracting device includes a cable inserted within a hollow of the hollow shaft and drawn outwardly from an end of the shaft, which is opposite to the end portion thereof where the sensor is fitted. The bearing may include a sealing element for sealing, with a resin, a portion of the hollow of the shaft from which the cable is drawn. In the case of this structure, it is possible to easily carry out a wiring of the cable, and it is possible to prevent dust or water from making an intrusion into the sensor side from the extracting portion of the cable.

In another embodiment of the present invention, the shaft is a hollow shaft, and the signal extracting device includes a cable inserted within a hollow of the hollow shaft. The bearing may have a connector connected with the cable and provided in an end of the shaft, which is opposite to the end thereof where the sensor is fitted. In the case of this structure, since the cable is connected by the connector, it is possible to connect the cable to the sensor by inserting the connector after attaching the bearing to the stationary member, and therefore, it is possible to more easily carry out the assembly. Further, since the connector can also serve as the sealing body, it is possible to reduce the number of the parts.

In the case of each of the structures mentioned above in the present invention, the sensor is a magnetic array sensor having a plurality of magnetic sensor elements.

As a combination of the magnetic array sensor and the magnetic generating element is used as the detecting device of the angle of rotation, it is possible to detect the angle of rotation angle on the basis of a distribution measurement of a magnetic field, and as a result, it is possible to achieve a compact structure and high resolution in comparison with that on the basis of the intensity of the magnetic field, and further, an absolute angle can be detected. In accordance with a principle on the basis of the magnetic field distribution measurement, it is possible to obtain an excellent environmental resistance with no influence of a temperature characteristic and a clearance gap of the magnetic generating element, and as a result, a stable detection can be achieved, and further, an excellent assembling characteristic can be achieved.

The bearing assembly with a rotation detecting device includes an inner race, an outer race, rolling elements interposed between the inner race and the outer race, a magnetic generating element provided on the outer ring side of the bearing assembly and having a directionality around a center of rotation of the outer ring so as to confront a bearing center portion of the inner ring, a sensor provided on the inner ring side and positioned at a bearing axis for detecting a magnetism of the magnetic generating element to output information on rotation or angle, and a signal extracting device for extracting a detection signal of the sensor through an interior of a shaft incorporated in an inner diametric portion of the inner ring. Accordingly, detecting the rotation of the outer race rotating type of bearing, a simple wiring of the signal and the downsizing of the bearing can be achieved.

As the sensor is a magnetic array sensor having a plurality of magnetic sensor elements arranged in an array, it is possible to achieve a high precision of the rotation detection and a detection of an absolute angle while achieving a downsizing.

BRIEF DESCRIPTION OF THE DRAWINGS

In any event, the present invention will become more clearly understood from the following description of examples thereof, when taken in conjunction with the accompanying drawings. However, the examples and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:

Fig. 1 is a cross sectional view of a bearing with a rotation detecting device not forming an embodiment of the present invention;
Fig. 2 is a perspective view showing a conceptual structure of the rotation detection device in the bearing;

Fig. 3 is a plan view showing an arrangement example of a magnetic array sensor and a converting circuit on a semiconductor chip in the rotation detection device;

Fig. 4 shows wave form charts of an output signal from each of magnetic line sensors in the magnetic array sensor;

Fig. 5 is an explanatory view of a calculation example by the converting circuit;

Fig. 6 is a cross sectional view of a bearing with a rotation detecting device according to an embodiment of the present invention;

Fig. 7 is a cross sectional view of a bearing with a rotation detecting device according to another embodiment of the present invention; and

Fig. 8 is a cross sectional view of a prior art.

BEST MODE FOR CARRYING OUT THE INVENTION

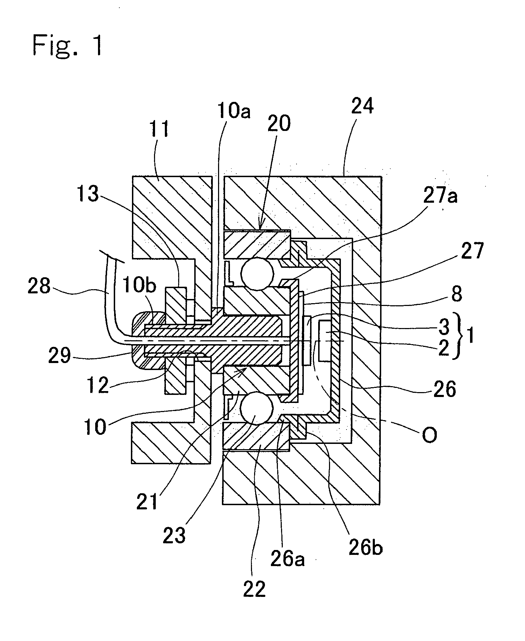

A description will be given of a first example, not forming an embodiment according to the present invention with reference to Figs. 1 to 5. Fig. 1 shows a cross sectional view of a bearing with a rotation detecting device according to this example. The bearing with the rotation detecting device is structured such that a rotation detecting device 1 is incorporated in a rolling bearing assembly 20. The rolling bearing assembly 20 includes an inner race 21, an outer race 22 and rolling elements 23 interposed between rolling surfaces of the inner race 21 and the outer race 22. The rolling element 23 is formed by a ball, and the rolling bearing is formed as a single row deep groove ball bearing. A stationary shaft 10 is press-fitted to an inner diametric portion of the inner race 21. The outer race 22 is press-fitted to an inner diametric portion of a rotating member 24 such as a roller or the like. In other words, in this rolling bearing assembly 20, the inner race 21 is serving as a stationary ring, and the outer race 22 is serving as a rotating ring.

The stationary shaft 10 has one end portion press-fitted to the bearing inner race 21 and the other end portion provided with a male thread portion 10b. The stationary shaft 10 has also a collar 10a in an axially intermediate portion thereof. The stationary shaft 10 is fixed to a stationary base 11 by fastening a nut member 13 into the male thread portion 10b passing through a shaft insertion hole 12 of the stationary base 11 and holding the stationary base 11 between the nut member 13 and the collar 10a. Further, the stationary shaft 10 is axially supported by the collar 10a sandwiched by the stationary base 11 and the inner race 21. The inner race 21 is brought into contact with the collar 10a so as to be positioned in the axial direction.

The rotation detecting device 1 has a magnetic generating element 2 arranged in the outer race 22 side of the rolling bearing assembly 20 and a sensor 3 arranged in the inner race 21 side. In this specification, a term "inner race side" represents the inner race 21 or a stationary member fixed to the inner race 21, and a term "the outer race side" represents the outer race 22 or a rotating member rotating together with the outer race 22.

The magnetic generating element 2 is structured such that a generated magnetism therefrom has a directionality around a center of rotation or a rotation axis O of the rolling bearing assembly 20, and is made up of a single substance of a permanent magnet or a compound material of the permanent magnet and a magnetic body. In the rotation detecting device 1 in Fig. 1, a magnetic generating element fitting member 26 attached to the outer race 22 and the magnetic generating element 2 is attached to the magnetic generating element fitting member 26, as described in detail later. The magnetic generating element fitting member 26 formed of a cylindrical cup shape has a cylindrical tip end portion 26a in an outer peripheral portion thereof and a flange 26b adjacent to the tip end portion, and is axially supported by press-fitting the tip end portion 26a to an inner diametric face of the outer race 22 and engaging the tip end portion 26a with an end face of the outer race 22. The magnetic generating element 2 is fixed to a center portion of one wall surface, confronting the stationary shaft 10, of the magnetic generating element fitting member 26 so as to conform the center of rotation O of the rolling bearing assembly 20 to the center of the magnetic generating element 2. Accordingly, the magnetic generating element 2 is rotated in accordance with the rotation of the outer race 22, and an N magnetic pole and an S magnetic pole, provided in the magnetic generating element 2, are rotated around the center of rotation O.

The sensor 3 detects the magnetism of the magnetic generating element 2 and outputs the information signal of a rotation or an angle of rotation. In the rotation detecting device 1 in Fig. 1, a sensor fitting member 27 is attached to the inner race 21 and the sensor 3 is attached to the sensor fitting member 27, as described in detail hereinafter. The sensor fitting member 27 formed of a shallow cylinder cup shape has a cylindrical tip portion 27a in a peripheral wall thereof, and is fixed to one axial end of the inner race 21 by press-fitting the cylindrical tip end portion 27a to an outer diameter surface of the inner race 21. The sensor 3 is fixed to a center portion of one wall surface, opposite to the stationary shaft 10, of the sensor fitting member 27 so as to confront the magnetic generating element 2 in the direction of the rotation axis O of the rolling bearing assembly 20.

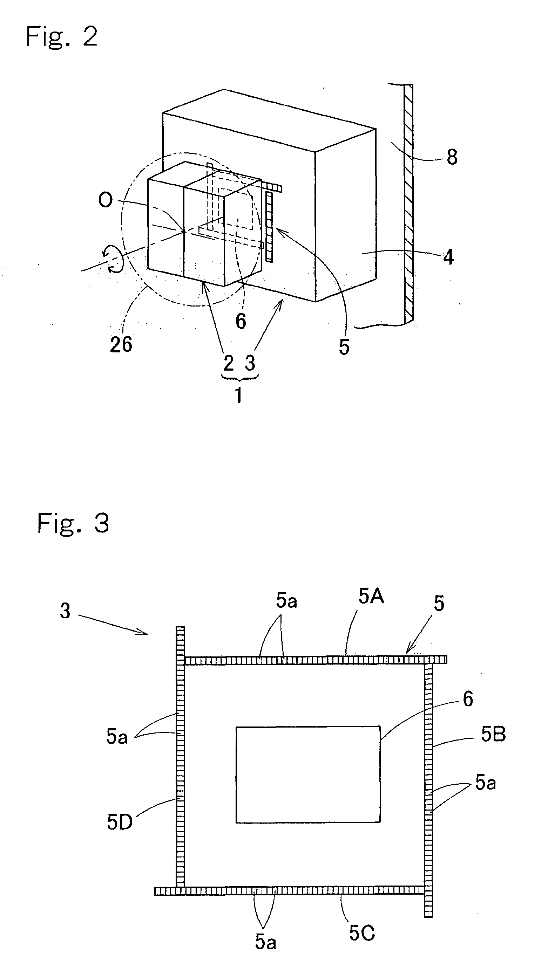

Fig. 2 is a perspective view showing a conceptual configuration of the rotation detecting device 1, and Fig. 3 is a plan view of the sensor 3. As shown in Fig. 2, the rotation sensor 3 includes a plurality of magnetic sensor elements 5a and a converting circuit 6 forming a calculating unit for converting outputs from the magnetic sensor elements 5a into a signal descriptive of the rotation or angle, all of those circuit elements 5a and 6 being integrated on a single semiconductor chip 4. In this semiconductor chip 4, the magnetic sensor elements 5a are arranged in a substantially rectangular pattern so as to form four magnetic sensor trains 5A, 5B, 5C and 5D. In this case, the substantially rectangular pattern, in which the magnetic sensor elements 5a are arranged, has a center coaxial with the rotation axis O of the rolling bearing assembly 20. It is to be noted that although each of the four magnetic sensor trains 5A to 5D is shown as in the form of a single linear array of the sensor elements 5a, each magnetic line sensor 5A to 5D may have a plurality of parallel extending linear arrays of the magnetic sensor elements 5a.

The converting circuit 6 referred to above is positioned inside the substantially rectangular pattern represented by the magnetic sensor trains 5A to 5D. In Fig. 2, the semiconductor chip 4 has a element carrier surface, on which the magnetic sensor elements 5a are arranged, and is fixed to the sensor fitting member 27 via a circuit board 8 with the element carrier surface thereof held in face-to-face relation with the magnetic generating element 2.

As shown in Fig. 1, a cable 28 corresponding to a signal extracting device for extracting a signal of the sensor 3 to outside is attached to the sensor fitting member 27. The cable 28 is led out to the outside from an axial end portion on the male thread portion 10b side through a hole inserting the center portion of the stationary shaft 10. The end portion of the stationary shaft 10 from which the cable 28 is led out is sealed by a sealing member 29 made of a resin or the like.

By integrating as described above, the magnetic sensor elements 5a and the converting circuit 6 on the semiconductor chip 4, electric wirings can be advantageously dispensed with and, hence, the rotation sensor 3 can be assembled compact in size and the rotation detecting device 1 can also be assembled easily, with an increased reliability against wiring disconnection. In particular, by arranging the converting circuit 6 inside the magnetic sensor trains 5A to 5D that are arranged in the substantially rectangular pattern as hereinbefore described, the semiconductor chip 4 can have a reduced size.

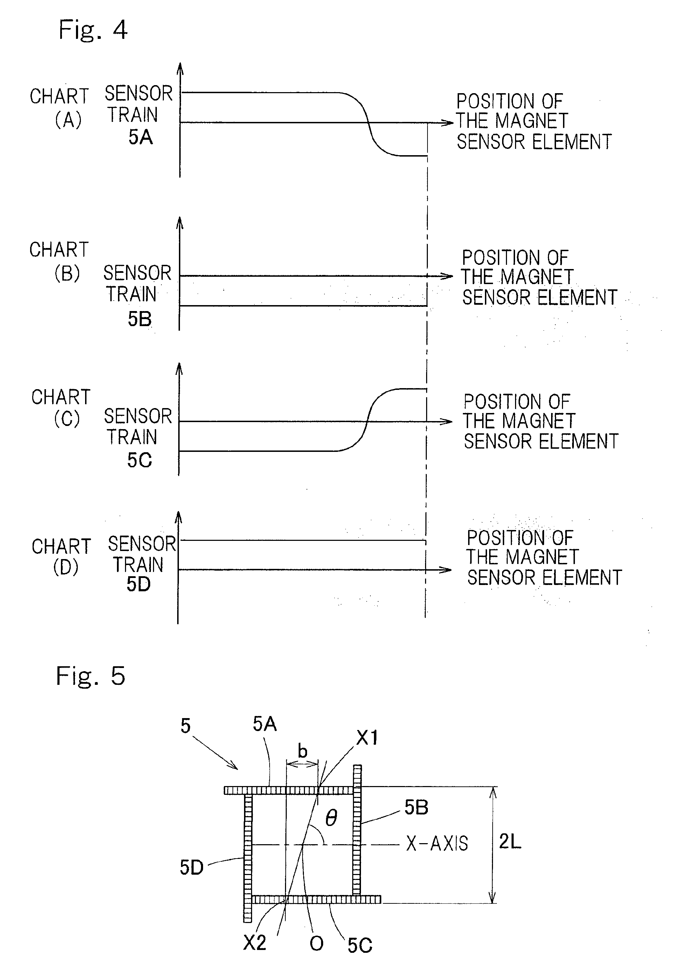

Figs. 4 and 5 are an explanatory diagram used to explain the angle calculating process performed by the converting circuit 6. Fig. 4 shows Charts (A) to (D) representing respective waveforms of outputs that are generated from the corresponding sensor trains 5A to 5D at a certain moment during rotation of the outer race 22. In each of Charts (A) to (D), the axis of abscissas represents respective positions of the magnetic sensor elements 5a in the associated magnetic line sensor 5A to 5D and the axis of ordinates represents the intensity of detected magnetic field.

Let it be assumed that a zero crossing position, which is a boundary between the magnetic N-pole and the magnetic S-pole of the magnetic fields detected by the magnetic sensor trains 5A to 5D, contains at a position X1 and a position X2 shown in Fig. 5. In this condition, respective outputs from the magnetic sensor trains 5A to 5D represent such waveforms as shown in Charts (A) to (D). Accordingly, the zero crossing positions X1 and X2 can be calculated by extracting signals in the vicinity of those zero crossing from the respective outputs of the magnetic sensor trains 5A and 5C and then linearly approximating them to each other.

Calculation of the angle can be accomplished with the use of the following formula (1):

$$\theta = \tan^{-1}(2L/b) \cdots\cdots\cdots (1)$$

wherein $\theta$ represents the rotation angle $\theta$ of the permanent magnet 2 expressed in terms of the absolute angle (absolute value), 2L represents the length of one of four sides of the rectangular shape depicted by the magnetic sensor trains 5A to 5D, and b represents the transverse length between the zero crossing positions X1 and X2.

When the zero crossing positions X1 and X2 lie on the magnetic line sensors 5B and 5D, respectively, the rotation angle $\theta$ can be calculated in a manner similar to that described above, using zero crossing position data obtained from the respective outputs of those magnetic line sensors 5B and 5D. The rotation angle $\theta$ calculated by the converting circuit 6 can be outputted through the output cable 28.

According to the above bearing with the rotation detecting device, since the magnetic generating element 2 and the sensor 3 are provided in the outer race 22 side and the inner race 21 side, respectively as shown in Fig. 1, in the case of the outer race rotating type of the bearing, it is possible to detect the rotation by means of the sensor 3 in the inner race 21 side corresponding to the stationary side and to extract the detection signal from the stationary side. In this case, since the cable 28 corresponding to the signal extracting device is structured such as to extract through the inner portion of the stationary shaft 10 press-fitted to the inner race 21, even in the case of extracting the sensor signal from the inner race 21 side in which the wiring space is hard to be obtained in the periphery thereof, it is possible to effectively arrange the signal extracting device such as the cable 28, to thereby simplify the wiring of the cable, accompanied by a downsizing of the bearing with a rotation detecting device. Further, since the magnetic generating element 2 in the outer race 22 side and the sensor 3 in the inner race 21 side are provided on the axis of the bearing so as to confront each other, it is possible to further downsize the bearing.

Further, when a combination of the magnetic array sensor 5 and the magnetic generating element 2 is used as the detecting device 1 of the angle of rotation, it is possible to detect the angle of rotation angle on the basis of a distribution measurement of a magnetic field, and as a result, it is possible to achieve a compact structure and high resolution in comparison with that on the basis of the intensity of the magnetic field, and further, an absolute angle can be detected. In accordance with a principle on the basis of the magnetic field distribution measurement, it is possible to obtain an excellent environmental resistance with no influence of a temperature characteristic and a clearance gap of the magnetic generating element 2, and as a result, a stable detection can be achieved, and further, an excellent assembling characteristic can be achieved.

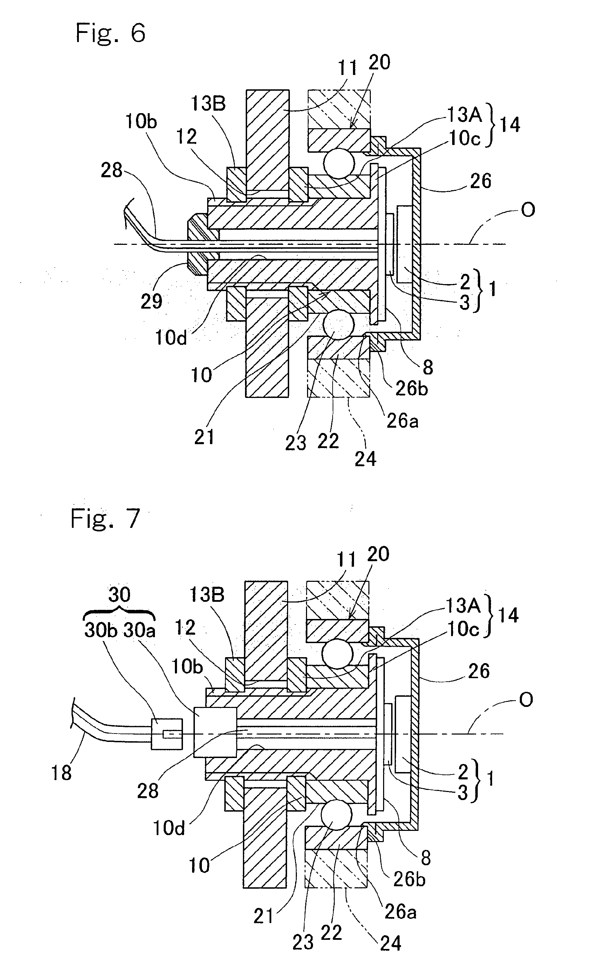

Fig. 6 shows an embodiment of the present invention. This embodiment is structured such that the sensor fitting member 27 attached to the bearing inner race 21 in the first embodiment shown in Figs. 1 to 5 is obviated, and the sensor 3 is attached to the end face of the stationary shaft 10 press-fitted to the inner diametric portion of the bearing inner race 21. The stationary shaft 10 is provided with a flange 10c in a axial end thereof confronting the rotation detecting device 1 so as to be pressed against an end face of the bearing inner race 21, and the sensor 3 of the rotation detecting device 1 is attached to the flange 10c via the circuit board 8.

A pair of nut members 13A and 13B are screwed to the male thread portion 10b on the side opposite to the sensor side in the stationary shaft 10. The stationary shaft 10 is fixed to the inner race 21 by sandwiching opposite end faces of the bearing inner race 21 between one nut member 13A and the flange 10c. In other words, a shaft fixing part 14 for fixing the stationary shaft 10 to the bearing inner race 21 is made up of the nut member 13A threadingly coupled to the stationary shaft 10 and the flange 10c. The other end portion of the stationary shaft 10 having the male thread portion 10b is inserted to the shaft insertion hole 12 of the stationary base 11, and is fixed to the stationary base 11 by sandwiching the stationary base 11 between the nut members 13A and 13B screwed to the male thread portion 10b.

The stationary shaft 10 is a hollow shaft, and the cable 28 corresponding to the signal extracting device for extracting the detection signal of the sensor 3 is inserted into the hollow portion 10d. The cable 28 is led out from the axial end opposite to the sensor fitting side end. The extracting portion of the cable 28 in the hollow portion 20b is sealed by the sealing member 29 made of the resin or the like. The attaching structure of the rotation detecting device 1 to the magnetic generating element 2, the positional relation between the magnetic generating element 2 and the sensor 3, and the other structures are the same as those in the first embodiment.

In this embodiment, since the stationary shaft 10 is fixed to the bearing inner race 21 by sandwiching the opposite end faces of the bearing inner race 21 by the shaft fixing part 14, that is, between the nut member 13A engaging with the male thread portion 10b and the flange 10c, it is possible to stably fit the shaft to the inner race with a simple procedure without being obstructed by the sensor. Further, since the cable 28 inserted within the hollow portion 10d of the stationary shaft 10 is drawn outwardly from an end side of the shaft, opposite to the sensor fitting side and sealed with the sealing body 29, it is possible to easily carry out a wiring of the cable 28, and it is possible to prevent dust or water from making an intrusion into the sensor 3 side from the extracting portion of the cable 28.

Fig. 7 shows a second embodiment according to the present invention. In this embodiment, an inserting connection type connector 30 is provided on the end side opposite to the sensor fitting side of the stationary shaft 10 in place of the sealing body 29, in the second embodiment shown in Fig. 6. The connector 30 includes, for example, a female member 30a embedded in the end portion of the stationary shaft 10 and a male member 30b. The female member 30a is connected to one end of the cable 28 which is accommodated in the hollow portion 10d and has the other end connected to the sensor 3. On the other hand, the male member 30b is connected to an external cable 18. The cables 28 and 18 are connected by inserting the male member 30b into the female member 30a. The other structures are the same as the second embodiment in Fig. 6.

In this embodiment, since the cable connection is established by means of the connector, the cable connection to the sensor 3 can be carried out by inserting the male member 30b into the female member 30a of the connector 30 after attaching the rolling bearing assembly 20 to the stationary base 11. Accordingly, assembly work can be facilitated. Further, since the connector female member 30b can be used as the sealing body 29 in the embodiment in Fig. 6, any sealing member can be obviated.

In the case that an external force in a radial direction is applied to the rolling bearing assembly 20 in any one of the embodiments mentioned above, the stationary shaft 10 may be press-fitted to the shaft insertion hole 12 of the stationary base 11, or, as in the example of fig. 1, the stationary shaft 10 may be inserted into the holes 12 with minimal space therebetween, followed by fastening with the nut member 13 and the collar 10a of the stationary shaft, or with the pair of the nut members 13A and 13B (Figs. 6 and 7), in order to prevent the stationary shaft 10 from disengaging from the rolling bearing assembly 20.

As mentioned above, the description is given of the preferred embodiments with reference to the accompanying drawings, however, those skilled in the art can easily estimate various changes and modifications within an obvious range by viewing the specification of the present invention.

**Claims**

1. A bearing assembly with a rotation detecting device which comprises:

   a stationary inner race (21);
   a rotational outer race (22);
   rolling elements (23) interposed between the inner race (21) and the outer race (22);
   a magnetic generating element (2) provided on the outer race side of the bearing assembly (20) and having a directionality around a center of rotation (O) of the outer race (22) so as to confront a bearing center portion of the inner race (21);

a sensor (3) provided on the inner race side and positioned at a bearing axis for detecting a magnetism of the magnetic generating element (2) to output information on rotation or angle, the sensor (3) being a magnetic array sensor comprising a plurality of magnetic sensor elements (5a) arranged in an array and the sensor (3) being attached to the end face of a shaft (10) incorporated in the inner diametric portion of the inner race (21); and

a signal extracting device for extracting a detection signal of the sensor (3) through an interior of a shaft (10) incorporated in an inner diametric portion of the inner race (21); and

a shaft fixing member (14) for fixing the shaft (10) to the inner race (21) by sandwiching the inner race (21) from opposite end faces, the shaft fixing member (14) comprising a flange (10c) formed in the end of the shaft (10) and a nut (13A) threadingly mounted on the shaft (10) for sandwiching the inner race (21) at a location between the nut (13A) and the flange (10c), wherein the shaft is a hollow shaft (10), and the signal extracting device comprises a cable (28) inserted within a hollow of the hollow shaft (10).

2. The bearing assembly as claimed in Claim 1, wherein the cable (28) is drawn outwardly from an end of the shaft (10), which is opposite to the end portion thereof where the sensor (3) is fitted and further comprising a sealing element (29) for sealing, with a resin, a portion of the hollow of the shaft (10) from which the cable (28) is drawn.

3. The bearing assembly as claimed in Claim 1, further comprising a connector (30) connected with the cable (28) and provided in an end of the shaft (10), which is opposite to the end thereof where the sensor (3) is fitted.

**Patentansprüche**

1. Lageranordnung mit einer Rotationsdetektionsvorrichtung, welche Folgendes aufweist:

einen stationären Innenring (21);
einen rotierenden Außenring (22);
Wälzkörper (23), die zwischen dem Innenring (21) und dem Außenring (22) angeordnet sind;
ein Magnetfeld-Erzeugungselement (2), das auf der Außenringseite der Lageranordnung (20) vorgesehen ist und eine Direktionalität um ein Rotationszentrum (O) des Außenrings (22) aufweist, so dass es gegenüber einem Lagermitten-Abschnitt des Innenringes (21) angeordnet ist;

einen Sensor (3), der auf der Innenringseite vorgesehen ist und auf einer Lagerachse positioniert ist, zum Detektieren eines Magnetismus des Magnetfeld-Erzeugungselements (2), um Informationen über eine Drehung oder einen Winkel auszugeben, wobei der Sensor (3) ein Magnetanordnungs-Sensor (Magnetic Array Sensor) ist, der eine Vielzahl von Magnetsensorelementen (5a) aufweist, die in einem Array angeordnet sind, und wobei der Sensor (3) an der Endseite einer Welle (10) befestigt ist, die in den diametral inneren Abschnitt des Innenringes (21) integriert ist; und

eine Signalextraktionsvorrichtung zum Extrahieren eines Detektionssignals des Sensors (3) durch ein Inneres einer Welle (10) hindurch, die in einen diametral inneren Abschnitt des Innenringes (21) integriert ist; und

ein Wellenbefestigungselement (14) zum Befestigen der Welle (10) an dem Innenring (21) durch sandwichartiges Einschließen des Innenringes (21) von gegenüberliegenden Endseiten her, wobei das Wellenbefestigungselement (14) einen in dem Ende der Welle (10) ausgebildeten Flansch (10c) und eine mittels Gewindeeingriff auf der Welle (10) angebrachte Mutter (13A) zum sandwichartigen Anordnen des Innenringes (21) in einer Position zwischen der Mutter (13A) und dem Flansch (10c) aufweist, wobei die Welle eine Hohlwelle (10) ist und die Signalextraktionsvorrichtung ein Kabel (28) aufweist, das ins Innere eines Hohlraums der Hohlwelle (10) eingeführt ist.

2. Lageranordnung nach Anspruch 1, wobei das Kabel (28) aus einem Ende der Welle (10) herausgeführt ist, welches dem Endabschnitt derselben, wo der Sensor (3) angebracht ist, gegenüberliegt, und welche ferner ein Dichtelement (29) zum Abdichten eines Abschnitts des Hohlraums der Welle (10), aus welchem das Kabel (28) herausgeführt ist, mit einem Kunstharz aufweist.

3. Lageranordnung nach Anspruch 1, welche ferner einen Verbinder (30) aufweist, der mit dem Kabel (28) verbunden ist und in einem Ende der Welle (10) vorgesehen ist, welches dem Ende derselben, wo der Sensor (3) angebracht ist, gegenüberliegt.

**Revendications**

1. Ensemble formant palier à dispositif de détection de rotation qui comprend :

un chemin de roulement intérieur stationnaire (21) ;

un chemin de roulement extérieur rotatif (22) ;

des éléments de roulement (23) interposés entre ledit chemin de roulement intérieur (21) et ledit chemin de roulement extérieur (22) ;

un élément de génération magnétique (2) prévu sur le côté « chemin de roulement extérieur » dudit ensemble formant palier (20) et ayant une directionalité autour d'un centre de rotation (O) dudit chemin de roulement extérieur (22) de façon à confronter une partie de centre de palier dudit chemin de roulement intérieur (21) ;

un capteur (3) prévu sur le côté « chemin de roulement intérieur » et positionné au niveau d'un axe dudit palier afin de détecter un magnétisme dudit élément de génération magnétique (2) de façon à fournir des informations sur la rotation ou un angle, ledit capteur (3) étant un capteur d'ensemble magnétique qui comprend une pluralité d'éléments de détection magnétiques (5a) agencés en réseau, et ledit capteur (3) étant fixé à la face d'extrémité d'un arbre (10) intégré à la partie diamétrale intérieure dudit chemin de roulement intérieur (21) ; et

un dispositif d'extraction de signal destiné à extraire un signal de détection dudit capteur (3) par le biais d'un intérieur d'un arbre (10) intégré à une partie diamétrale intérieure dudit chemin de roulement intérieur (21) ; et

un élément de fixation d'arbre (14) destiné à fixer ledit arbre (10) sur ledit chemin de roulement intérieur (21) en prenant en sandwich ledit chemin de roulement intérieur (21) depuis les faces d'extrémité opposées, ledit élément de fixation d'arbre (14) comprenant une bride (10c) formée dans l'extrémité dudit arbre (10) et un écrou (13A) monté par filetage sur ledit arbre (10) afin de prendre en sandwich ledit chemin de roulement intérieur (21) à un emplacement situé entre ledit écrou (13A) et ladite bride (10c),

dans lequel ledit arbre est un arbre creux (10), et ledit dispositif d'extraction de signal comprend un câble (28) inséré dans un creux dudit arbre creux (10).

2. Ensemble formant palier selon la revendication 1, dans lequel ledit câble (28) est tiré vers l'extérieur depuis une extrémité dudit arbre (10), qui est opposée à la partie d'extrémité de celui-ci au niveau de laquelle ledit capteur (3) est fixé, et qui comprend en outre un élément d'étanchéité (29) destiné à étanchéiser, avec une résine, une partie du creux dudit arbre (10) depuis lequel ledit câble (28) est tiré.

3. Ensemble formant palier selon la revendication 1, qui comprend en outre un connecteur (30) relié audit câble (28) et prévu dans une extrémité dudit arbre (10), qui est opposée à l'extrémité de celui-ci au niveau de laquelle ledit capteur (3) est fixé.

Fig. 1

**Fig. 2**

**Fig. 3**

Fig. 4

CHART (A)  SENSOR TRAIN 5A                     POSITION OF THE MAGNET SENSOR ELEMENT

CHART (B)  SENSOR TRAIN 5B                     POSITION OF THE MAGNET SENSOR ELEMENT

CHART (C)  SENSOR TRAIN 5C                     POSITION OF THE MAGNET SENSOR ELEMENT

CHART (D)  SENSOR TRAIN 5D                     POSITION OF THE MAGNET SENSOR ELEMENT

Fig. 5

Fig. 6

Fig. 7

Fig. 8

PRIOR ART

**EP 1 947 357 B1**

**REFERENCES CITED IN THE DESCRIPTION**

**Patent documents cited in the description**

- JP 2004037133 A
- US 4988219 A
- JP 2003148999 A
- JP 2203020 A
- WO 2004025307 A1
- WO 9800720 A1